Europäisches Patentamt

**European Patent Office** (11) Publication number: **0 065 505**

**Office européen des brevets** A2

(12) # EUROPEAN PATENT APPLICATION

(21) Application number: 82850092.6 (51) Int. Cl.³: **B 65 D 19/40**

(22) Date of filing: 29.04.82

(30) Priority: 11.05.81 SE 8102945

(71) Applicant: Sjögren, Kjell Ake, Rensvist,
S-447 00 Värgärda (SE)

(43) Date of publication of application: 24.11.82
Bulletin 82/47

(72) Inventor: Sjögren, Kjell Ake, Rensvist, S-447 00 Värgärda
(SE)

(84) Designated Contracting States: AT BE CH DE FR GB IT
LI NL SE

(74) Representative: Burman, Tore et al, Bergling &
Sundbergh AB P.O.Box 7645, S-103 94 Stockholm (SE)

(54) Pallet.

(57) A pallet including a planar member (1), preferably a fibre
board, having fixed thereto cast or moulded feet (3) of a castable
or mouldable material, preferably concrete. The feet are moulded
in situ in association with holes (11) in the board so that the
portions (7) of the feet moulded into the holes provide an interlock
between the feet and the planar member.

Title of Invention
PALLET

Technical Field

The present invention relates to a pallet of the kind comprising a preferably platform-like structure intended for carrying goods, and a number of separate feet connected thereto projecting towards one side. The feet are intended for supporting the carrying structure (and goods possibly placed thereon) when the pallet is placed on a substructure such as a floor or a setting-down area, in a manner such that the pallet can be lifted conventionally by a fork truck or the like, for instance.

Background Art

Pallets of the kind mentioned above, comprising a wood structure with nailed-on wooden feet are already known. Furthermore, there are known pallets in which the carrying structure and feet are moulded or formed integrally for instance in plastics material, the feet generally being hollow and open upwards towards the loading face of the pallet. Finally, there are known pallets comprising a planar member with holes intended for attaching feet, each foot comprising a foot portion proper in the form of a hollow truncated cone, and a locking ring for placing on the upper face of the planar member for coupling to the foot portion with the aid of a flanged locking member thrusting down through the associated hole, thus forming the foot and locking it to the planar member.

None of the handling pallets of the kind mentioned above simultaneously meets requirements for simple and cheap manufacture, the possibility of highly mechanized manufacture and simple adjustment to goods for use as disposable units.

### Object of the Invention

The object of the present invention is to provide a new pallet of the kind mentioned in the introduction, and also a method of producing such a pallet, whereby the requirements mentioned above can easily be met while also gaining other advantages.

### Summary of Invention

The inventive pallet is essentially characterized in that the feet include moulded-in or cast-in material, which is moulded or cast in direct connection to recesses or holes in the carrying structure at the places where the feet are to be provided, so that the holes or recesses contain or accommodate moulded material such that the feet are attached by moulding into the carrying structure in a form-closed or interlocked way. Although the feet can also comprise other material, as will be accounted for later, it is simple and preferable to let the feet substantially comprise moulded material. The feet may thus be regarded as moulded or cast in situ.

To ensure the self-closed or form-closed union or attachement, it is suitable that the ends of the feet coacting with the carrying structure have a moulded neck section with which the walls of the recesses or holes are in engagement. Said holes or recesses, suitably through-going from the foot face of the carrier structure to its goods face, are provided to advantage so that they at least partially expand in a direction from the foot face to the goods face. Other implementations are naturally conceivable in as far as they give configurations with undercut surfaces or transversely extending projections of the attachment portions of the feet or the carrying structure, thus preventing pulling off the feet towards the foot face or side. In conjunction with through holes, the attachment portion of a foot can thus include preferably moulded projections extending laterally at the mouth of the hole on the goods side.

The mouldable material can to advantage comprise concrete, which is cheap, can be reinforced by means of lengths of steel wire, plastic fibres or the like, and may include aggregate or ballast material, e.g. expanded clay or light weight clinker. Conventional moulding or casting apparatus can be easily utilized for moulding the feet. To advantage, the carrying structure may comprise a comparatively thin planar member or sheet, particularly a fibre board, provision of the holes or recesses thus being enabled by machine very simply and rationally. Material costs will thus be small.

The use of a porous or similar aggregate or ballast material means that it will be possible to attach a shoe or the like to the bottom of a foot by nailing. Also, a board or the like can be attached to a row of feet in the same manner, if desired.

By the combination of a holed planar member with feet moulded or cast in situ, which are simultaneously inter--locked or form-closed in the holes, the inventive pallet can be provided very rationally and without the requirement of special means for attaching the feet to the carrying structure. As will be further understood, the number of feet, as well as their distribution and form outside the carrying structure itself, may be very easily varied without any troublesome alterations in the machinery utilized for producing the pallet. In other words, the inventive pallet can just as easily be adapted to a given standard as to a particular need suiting the goods involved. A further advantage with the inventive pallet is that it can be made with a completely smooth and uniform upper sheet or planar surface.

The method of producing a pallet in accordance with the invention is essentially characterized in that where the feet are to be connected to the carrying structure recesses or holes are arranged therein (one or more for each foot), in that foot mould means are placed against the carrying structure for connection to, and communication with the holes or recesses, and in that material is cast or moulded into said means and holes or recesses to form feet, which are united in a interlocking way to the carrying structure. Although the holes or recesses shall be executed such that together with material or parts included in the feet they will give the necessary form-closed interlock, it will be understood that the requirements placed on the holes or recesses in respect of accuracy in location, dimensions, form etc. will be small, since possible deviations in said respects are automatically compensated as a result of the casting or moulding method per se.

As previously mentioned, conventional casting or moulding equipment can be used for the casting or moulding step, particularly concrete casting equipment. Said foot mould means may be included in the equipment in question. However, as foot mould means it is possible to utilize, at least partially, means which will be a part of the finished feet, particularly a surface layer thereof. The foot mould means can thus include a shell member corresponding to the shape of the foot portion proper, and which gives the completed foot an advantageous surface structure.

As will be understood, casting or moulding of the feet is performed to advantage with the carrying structure turned upside down, i.e. positioned with its carrying face downwards, the mouldable material being delivered from above and down into the foot mould means. In conjunction with through-going holes in the carrying structure, the latter can quite simply be placed on a substructure so formed as to close off the openings of the holes facing towards the goods side of the carrying structure. In this way, it is simple to provide for the holes to be filled with mouldable or castable material flush with the parts of the carrying structure surrounding the openings of the holes on the goods side. When the carrying structure is a planar member or sheet, its upper face will thus be completely flat and smooth.

## Brief description of the Drawings

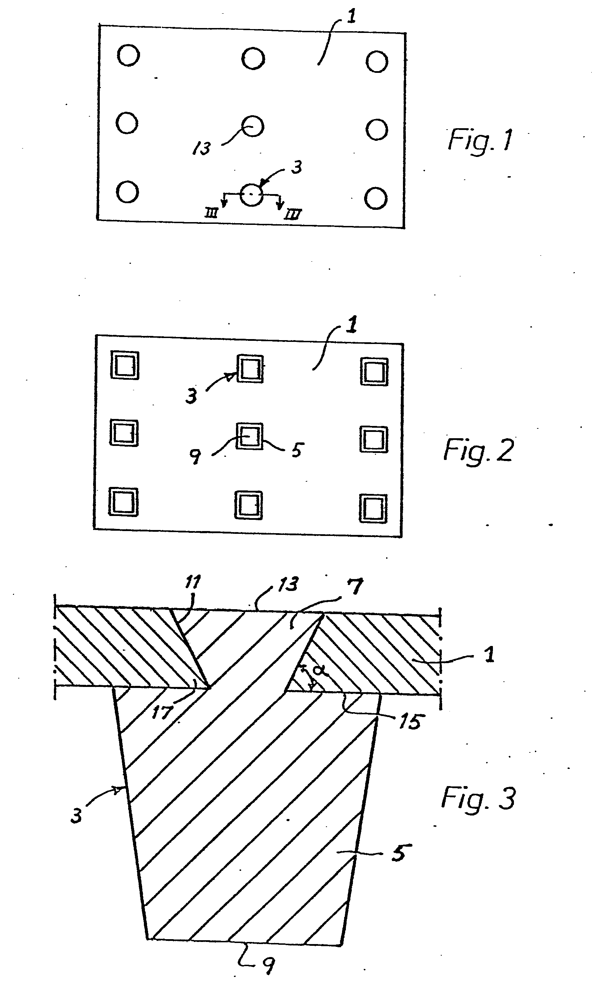

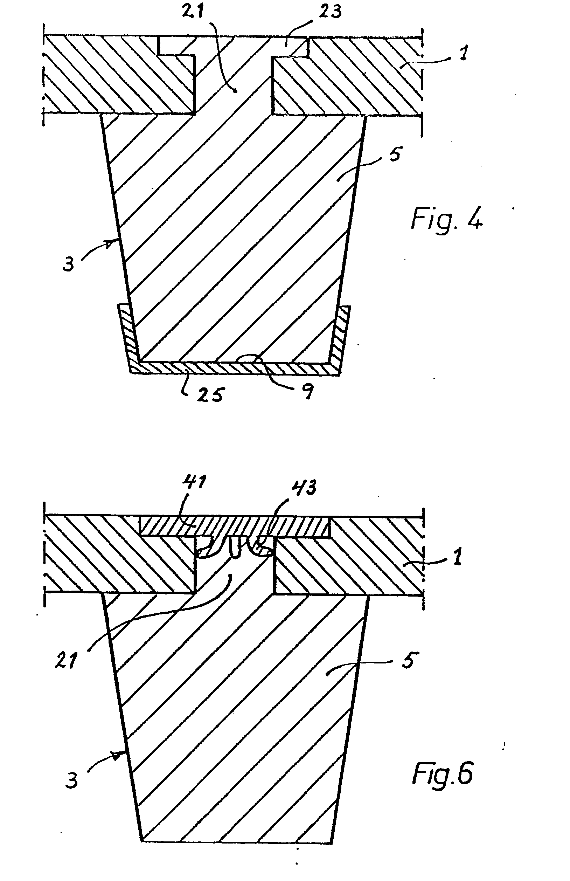

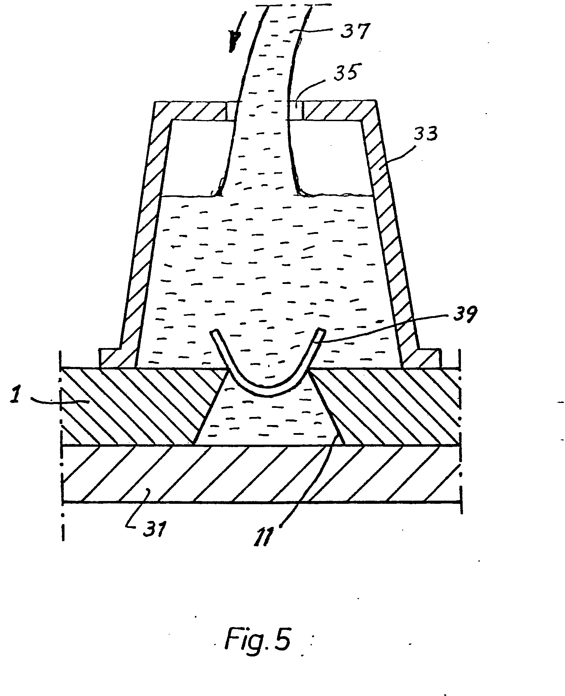

The invention is illustrated by means of examplary embodiments shown in the appended drawings. Fig. 1 is a view from above of a pallet made in accordance with the invention. Fig. 2 is a view from below of the pallet according to Fig. 1. Fig. 3 is an enlarged, partial sectional view taken along the line III-III in Fig. 1 and illustrating the construction of a foot. Fig. 4 is an enlarged, partial sectional view of the same kind as in Fig. 3, but illustrating an alternative embodiment of the foot. Fig. 5 is a schematic, partial, sectional view illustrating a method of providing a foot of the kind illustrated in Fig. 3. Fig. 6 is a view of the same kind as in Figs. 3 and 4, illustrating a further alternative embodiment of an inventive foot.

## Description of preferred Embodiments

The embodiment of a pallet in accordance with the invention, illustrated in Figs. 1-3, includes a rectangular planar member, sheet or board 1 (hereinafter designated "board"), preferably a wood fibre board, with a typical thickness of 14 or 22 mm, and nine concrete feet 3, each cast in one piece such as to be fixed in the board 1, so that they project out on the underside of the board. The feet 3 are conventionally distributed over the board 1, and each includes a foot portion 5 proper, situated outside the board, and an attachment portion 7, cast into the board. The foot portion 5 is formed as a parallel, truncated, right pyramide with a square bottom contact surface 9. The attachment portion 7 has the form of a parallel, truncated, right cone turned upside down and projecting from the center of the foot portion 5. The attachment portion 7 completely fills its complementary hole 11 in the board 1. The upper surface 13 of the attachment portion 7 is thus flush with the upper surface of the board 1.

At the transition between the foot portion 5 and attachment portion 7, the feet 3 have a narrower or constricted neck portion, as will be seen from Fig. 3, in which the material of the board engages to give a formdependent interlock, preventing the attachment portion 7 of the feet from being pulled out from the board. The diverging angle (i.e. conical angle ) α of the hole 11, the cross section of the weakest portion of the neck portion (i.e. at the very juncture between the foot portion 5 and attachment portion 7) and the annular surface 15 of the foot portion 5 contacting the board 1 are dimensioned in consideration of the strength of the materials utilized, and the stresses to which the pallet may be subjected. For example, the wedge--shaped annular region 17 of the board 1 must be able to withstand the stresses occurring when the feet are subjected to transverse forces. It has been found that when utilizing feet 3 of concrete and a wood fibre board 1, the angle α should suitably be in the order of magnitude 70-80°.

In the embodiment illustrated in Fig. 4, the attachment portion of the foot 3, and its complementary hole in the board 1 have been modified. The attachment portion, which has here been given a mushroom shape, comprises a lower central cylindrical portion 21, topped by a relatively thin disk portion 23 extending transversely relative to portion 21, the upper side of the disk portion being flush with the top face of the board 1. The hole in the plate thus has the shape of a bore with a relatively shallow counterbore of relatively large transverse extension at the top face of the board. The central portion 21 will constitute a neck portion of the foot 3, notably reduced in diameter. In this case, the foot 3 is further provided with cladding 25, e.g. of plastics, on the bottom part of the foot portion 5. The cladding 25 reduces friction against the substructure on which the feet rest, e.g. for facilitating minor movements of the pallet on the substructure, thereby reducing the risk of breaking off, or breaking up the feet when such movement is undertaken.

A method of providing a foot of the kind illustrated in Fig. 3 is illustrated schematically in Fig. 5. The pre-holed board 1 is placed upside down on a flat substructure 31, so that the latter closes off the mouth of hole 11 on the goods side of the board. A foot portion mould 33 is then placed, and suitably retained in such attitude upside down over the mouth of the hole on the foot side of the board. The mould 33 has an interior configuration corresponding to the exterior configuration of the foot portion 5, and has an opening 35 in its bottom facing upwards through which concrete 37 is delivered to fill the hole in the board 1 and mould 33. After the concrete has set, the mould 33 is removed, whereby the foot is finished.

Fig. 5 also illustrates an example of how a reinforcing element can be put advantageously into a cast foot in accordance with the invention. The reinforcing element is a curved length of reinforcing wire 39. Before the mould 33 is put in place, the wire is placed at the mouth of the hole resting against the edge thereof, and with its curved center portion depending into the hole. Apart from being able to place the reinforcing element extremely easily in this way, without utilizing any extra spacing or retaining means of any kind, the advantage is also gained that the reinforcement acts at the best position, i.e. at the transition between the foot portion and the attachment portion.

It is to be emphasized with regard to the embodiment according to Fig. 5, that the mould 33 can very well be made to constitute a portion of the completed foot, i.e. cast in situ with the concrete filling 1, thereby constituting a cladding corresponding to that illustrated in Fig. 4.

A still further variant of the embodiment of a foot in accordance with the invention is illustrated in Fig. 6. The hole made in the board 1 corresponds to that in the embodiment according to Fig. 4. In the upper counterbore there is however arranged a foot portion in the form of a disk 41, made of cast iron for instance, from which projections 43 thrust down into the cylindrical central hole. The projections 43 are formed such that they unite the disk 41 with the rest of the foot attachment portion after the casting process, the form-dependent interlock with the board thus being ensured. The projections 43 can suitably have their free ends curved outwards laterally.

The embodiment according to Fig. 6 can be suitable to utilize when it is undesirable with an unworked concrete surface on the upper side of the pallet, or when a substructure closing off the goods side mouth of the hole (as in Fig. 5) cannot be utilized during the casting process. In the latter case the disk 41 may constitute a stop for the concrete. It may then be suitable to make the projections 43 so that they keep the disk 41 in place by coacting with the wall of the central hole.

The invention is naturally not limited to the illustrated and described embodiments, but variations and modifications are possible within the scope of the following claims. Thus, inter alia, it is possible to allow the attachment portion of the feet to include material or parts at a higher level than the parts of the board surrounding the upper mouth of the hole, and possibly extending transversely out over these board parts.

CLAIMS

1. A pallet comprising preferably platform-like carrying structure for supporting goods, and a plurality of separate feet connected thereto and projecting out on one side, characterized in that the feet at least partially, and preferably mainly, comprise a material cast or moulded in situ to the carrying structure, said structure being provided with recesses or holes in association with the feet containing such cast or moulded material, so that the feet and the carrying structure are interlocked.

2. A pallet as claimed in claim 1, characterized in that the ends of the feet connected to the carrying structure have a moulded or cast neck portion with which the carrier structure coacts for providing said interlock.

3. Pallet as claimed in claim 1 or 2, characterized in that the preferably through-going recesses or holes in the carrying structure increase in cross section at least partially, in a direction from the foot side of the carrier structure to its opposite side.

4. Pallet as claimed in any of the preceding claims, characterized in that the cast or moulded material is concrete.

5. Pallet as claimed in any of the preceding claims, characterized in that the carrying structure is a fibre board.

6. A method of producing a pallet, said pallet including a preferably platform-like carrying structure intended for supporting goods, and a plurality of separate feet connected thereto and projecting out on one side, characterized by providing, at the places for connecting the feet to the carrying structure recesses or holes in said structure, placing mould means at the carrying structure and in communication with said recesses or holes, and casting or moulding mouldable material in said mould means and in said recesses or holes to form feet which are interlocked to the carrying structure by their cast or moulded shape.

7. A method as claimed in claim 6, characterized by utilizing as mould means, at least partially, surface cladding or contour defining means included in the completed feet.

8. A method as claimed in claims 6 or 7, characterized by providing throughholes in the carrying structure, placing the carrying structure horizontally on a substructure with its foot side facing upwards and so that .the mouths of the holes facing towards the substructure are closed off by said substructure, or by a special mould means placed thereon, placing downwardly and upwardly open mould means against the foot face of the carrying structure, so that the mould means downwardly enclose the upwardly facing hole mouths, and supplying mouldable or castable material through the upward openings of the mould means.

9. A method as claimed in any of claims 6-8, characterized in that the mouldable or castable material is concrete.

10. A method as claimed in any of claims 6 - 9, characterized in that a curved elongate reinforcing element is mounted in at least some of the upwardly facing mouths of the holes, such that the element rests on the hole edges with its central portion dependent in the hole.

Fig. 1

Fig. 2

Fig. 3

Fig. 4

Fig.6

Fig.5